# EUROPEAN PATENT SPECIFICATION

(11) **EP 1 580 113 B1**
(45) Date of publication and mention of the grant of the patent: **27.10.2010**
(21) Application number: 05006604.2
(22) Date of filing: 24.03.2005
(51) Int. Cl.: B62M 9/06

(54) **Power transmission device and traveling vehicle**
Antriebsvorrichtung und Fahrzeug
Dispositif d'entraînement et véhicule

(30) Priority: 24.03.2004 JP 2004087213
(43) Date of publication of application: 28.09.2005
(73) Proprietor: Yamaha Hatsudoki Kabushiki Kaisha, Iwata-shi, Shizuoka-ken (JP)
(72) Inventor: Hata, Shinichiro, Iwata-shi Shizuoka-ken (JP); Suzuki, Hitoshi, Iwata-shi Shizuoka-ken (JP)
(74) Representative: Grünecker, Kinkeldey, Stockmair & Schwanhäusser Anwaltssozietät

(56) References cited:
- EP-A- 1 138 591
- US-A- 5 222 572
- US-B1- 6 341 659
- US-B1- 6 341 660
- PATENT ABSTRACTS OF JAPAN vol. 016, no. 087 (M-1217), 3 March 1992 (1992-03-03) & JP 03 271090 A (YAMAHA MOTOR CO LTD), 3 December 1991 (1991-12-03)
- PATENT ABSTRACTS OF JAPAN vol. 1996, no. 01, 31 January 1996 (1996-01-31) & JP 07 247854 A (SUZUKI MOTOR CORP), 26 September 1995 (1995-09-26)

## Description

The present invention relates to a power transmission device according to the preamble part of independent claim 1. Further, the invention relates to a travelling vehicle, in particular a straddle-type vehicle, such as a motorcycle which is preferably of a scooter type, comprising a belt type power transmission device.

Such a power transmission device, in particular being of the endless belt type, is commonly used for motorcycles of the scooter type. For the purpose of cooling the power transmission device, commonly an external air duct structure is provided separately at these motorcycles.

A conventional example of a separate air cleaning and cooling device is known, for example, from JP-A-10-231759. Therein, it is described that for the purpose of providing an air cleaner for scooter type vehicles that is simple in a structure, does not require a special-purpose air cleaner to be provided separately, can cool a V belt transmission device, can use a wet type element with high cleaning efficiency, and does not require troublesome work of element replacement only for the V belt transmission device, a cleaning chamber for an engine and a cleaning chamber for V belt cooling arranged around the cleaning chamber for an engine are provided inside a case, the cleaning chamber for an engine and the cleaning chamber for V belt cooling are sectioned into air inlet chambers and air exhaust chambers by filter means, respectively, air inlets are provided in the air intake chambers, a first cleaning air outlet coupled to an air intake system of an engine is provided in the air exhaust chamber of the cleaning chamber for an engine, and a second cleaning air outlet coupled to a belt chamber case housing the V belt transmission device is provided in the air exhaust chamber of the cleaning chamber for V belt cooling.

The filter means are supported by supporting members, specifically, ribs between the air intake chambers and the air exhaust chambers. However, the conventional technique does not consider a shape of the ribs. For example, there is a problem in that the ribs are provided perpendicular to a flow of cooling wind supplied to the belt transmission device to be resistance against the cooling wind flow.

Moreover, the described device is coupled externally via air ducts to the belt chamber of the transmission casing, which requires additional components increasing manufacturing time and costs.

In EP 1138591 A2, a power transmission device readable on the preamble part of independent claim 1 is disclosed. An air filter is mounted on a cylindrical portion to be supported within an air passageway of an outer cover. The cylindrical portion comprises a circumferential wall in which a plurality of slits are formed which are oriented toward the center of the cylindrical portion.

It is an objective of the present invention to provide a power transmission device with a cooling structure having an improved cooling capacity and being more effectively combinable thereto. Besides, it is an objective of the invention to improve a travelling vehicle of the above kind so it can be more economically manufactured.

For a power transmission device, said objective is solved in an inventive manner by a power transmission device having the combination of features of independent claim 1.

According to the invention, it is possible to provide a power transmission device with an improved cooling structure having an increased cooling capacity that does not hinder a flow of cooling wind supplied to the belt transmission device.

Since the air filter is supported between the belt chamber and the air duct case, a separate air cleaner box is no longer required which reduces parts and costs when manufacturing the power transmission device.

Preferably, the air duct case is attached to a belt chamber case which forms the belt chamber therein.

Further, preferably first supporting members for supporting the air filter between the belt chamber and the air duct case are provided with, in particular integrally formed with, the air duct case.

Furthermore, preferably second supporting members for supporting the air filter between the belt chamber and the extern*al air supply path are provided with, in particular formed integrally, with a belt chamber case.

Moreover, preferably at least one of the first and/or second supporting members is formed so as to lead the cooling air supplied from the external air supply path into the belt chamber via the air inlet and to circulate in the belt chamber from a center toward a space around the center.

Also, preferably the first and/or second supporting members are formed by a plurality of ribs.

According to a still further preferred embodiment, the angle for offsetting the supporting members and/or the ribs is in a range of 15° to 45°.

Also, according to a preferred embodiment, a shape of the first and/or second ribs is a linear or curved shape, wherein in particular a radially inner end is oriented towards a center of the duct case.

Also, according to a further preferred embodiment, the ribs serving as the second supporting member are formed on the belt chamber side in a shape matching the first ribs and/or the same number as the first ribs to securely support the air filter therebetween.

Besides, for a traveling vehicle, the above objective is solved in an inventive manner according to claim 10.

Since the travelling vehicle can be provided with a power transmission device having an integrated air cooling and cleaning structure, also the travelling vehicle can be manufactured more economically.

In the following, the invention will be described in greater detail by means of a preferred embodiment thereof with reference to the attached drawings, wherein:
- Fig. 1: is a side view of an entire scooter including a belt type power transmission device according to an embodiment;
- Fig. 2: is a sectional view of a unit including a V belt type continuously variable automatic transmission, an opened surface of which is covered by a belt chamber case;
- Fig. 3: is an enlarged view of a part of an air duct; and
- Fig. 4: is a front view of the air duct obtained by viewing through the inside of the air duct.

Next, an embodiment will be explained.

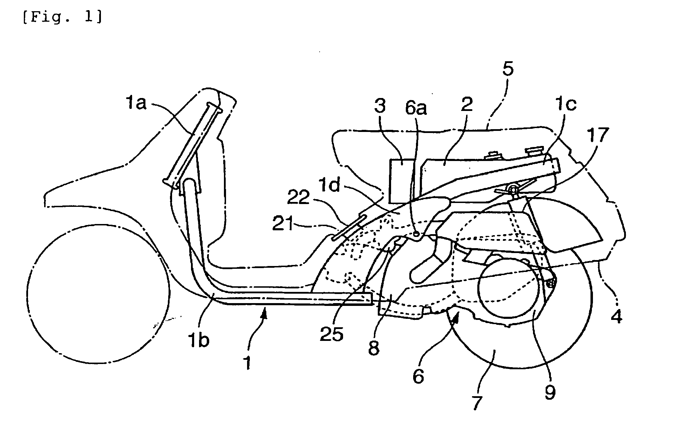

Fig. 1 shows a left side view of an entire motorcycle (scooter), which has an engine including a belt type power transmission device according to an embodiment, on the basis of a forward travel direction thereof.

Reference numeral 1 denotes a body frame of the scooter. This body frame 1 is assembled by welding a front member 1 b made of a steel pipe that extends downward from a steering pile 1 a and, then, bends backward, a rear member 1 c that extends from a rear part of this front member 1 b to the rear obliquely upward, and a bracket 1 d made of a steel plate for reinforcing a coupling part of the front member 1b and the rear member 1c. Reference numeral 2 denotes a fuel tank attached to the rear member 1 c of the body frame 1. Reference numeral 3 denotes a storage battery. The fuel tank 2 and the storage battery 3 are covered by a body cover 4. Reference numeral 5 denotes a driving seat for a rider.

A power unit 6 is mounted below in the rear of the body frame 1, that is, below the driving seat 5. This power unit 6 is a so-called unit swing type that has a rear wheel 7 at a rear end and is supported by a pivot shaft 6a in a front part to pivot on the body frame 1. This power unit 6 has an engine 8, a belt chamber case (a transmission case) 9 extending backward from a left side of a crankcase of this engine 8, and the rear wheel 7 held on the inner side in the rear of this case 9.

The belt type power transmission device mainly includes a belt chamber case and a V-belt automatic transmission housed in this case. A primary sheave (a drive pulley) is housed in the front in this case and a secondary sheave (a driven pulley) is housed in the rear in the belt chamber case. A V-belt is wound between these sheaves.

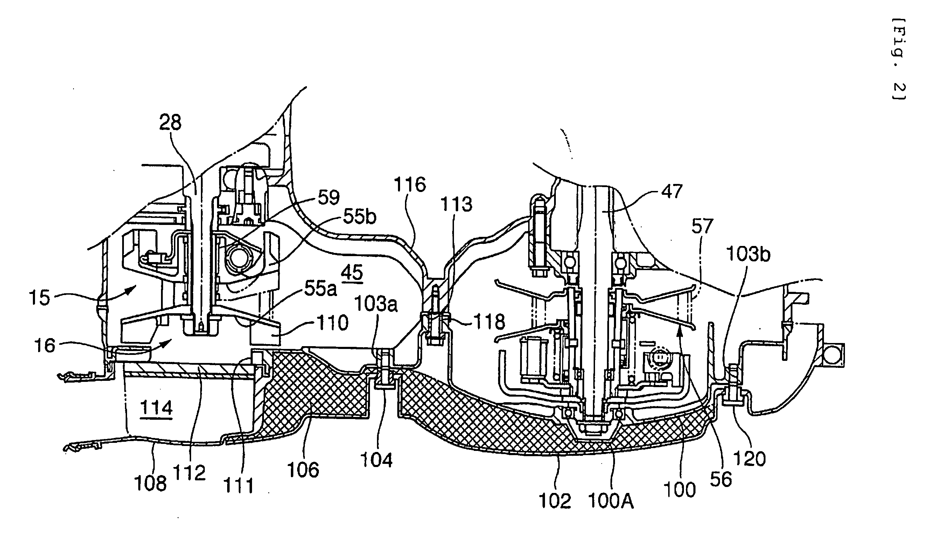

Fig. 2 is a sectional view of a belt type power transmission device including a V-belt type continuously variable automatic transmission, an opened surface of which is covered by a belt chamber case 100. A V-belt type continuously variable automatic transmission 16 includes a primary sheave (a drive pulley) 55 mounted at an end in a vehicle width direction of a crankshaft 28 (connected such that a drive force of the crankshaft is transmitted thereto), a secondary sheave (a driven pulley) 56 mounted at an end of a shaft 47, and a V-belt 57 wound around the primary sheave 55 and the secondary sheave 56. Reference numeral 116 denotes a crankcase. The crankshaft 28 projects into a belt chamber 45 of the crankcase.

The primary sheave 55 includes a drive side fixed pulley half body 55a fixed to an end on the belt chamber case 100 side of the crankshaft 28 and a drive side movable pulley half body 55b that rotates together with the crankshaft 28 via a slide collar 59 arranged to be slidable further to a left direction than the drive side fixed pulley half body 55a (to an inner side in an axial direction of the crankshaft 28).

An opening 113 for fastening means such as a bolt is formed in the belt chamber case 100 manufactured by aluminum casting or the like. A bolt 118 is screwed to a boss portion of the crankcase, whereby the belt chamber case is fixed to the crankcase 116. Reference numeral 100A is a circular projected portion projected in the vehicle width direction such that a tip portion of the sheave shaft 47 is housed therein.

A circular opening 111 is formed in a position of the belt chamber case opposed to the primary sheave 55. A resin cover 102 is fixed on an outer side in the vehicle width direction of the belt chamber case. Bolts 104 and 120 for fixing the resin cover to the belt chamber case are fixed to holes 103a and 103b formed in the belt chamber case. A sound absorbing material 106 is filled between the belt chamber case and the resin cover.

An air duct case 108 is engaged at an end on the primary sheave side of the opening 111 and the resin cover 102 of the belt chamber case. An external air supply path 114 is formed in an air duct. Reference numeral 112 denotes an air filter laid in the opening. Reference numeral 110 denotes a fin integrally formed in the primary sheave. When the primary sheave rotates according to rotation of the crankshaft, external air is sucked from the air duct according to rotation of the fin and supplied into the belt chamber 45 via the air filter.

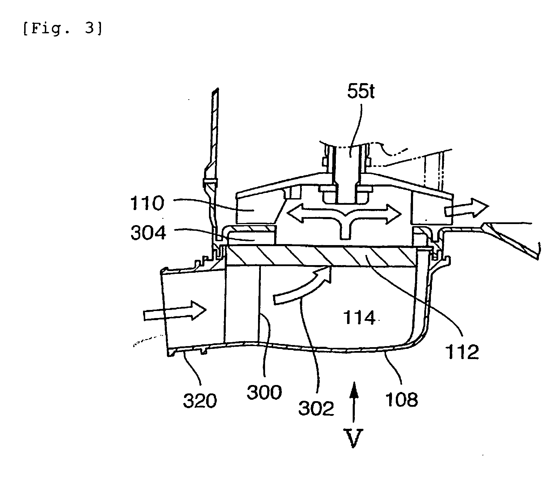

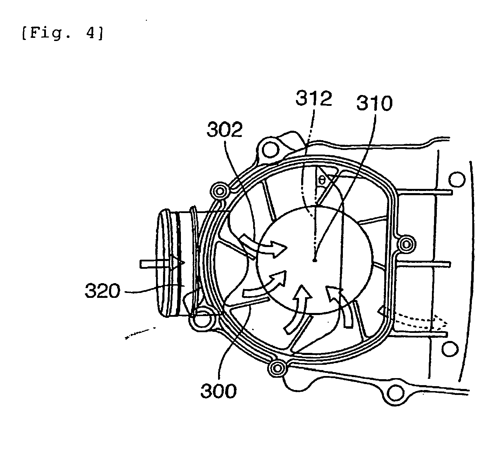

Fig. 3 is an enlarged view of a part of the air duct. Fig. 4 is a front view of the air duct obtained by viewing through the inside of the air duct. Fig. 4 is a view of the air duct viewed from a direction of V in Fig. 3.

In Fig 3, reference numeral 300 denotes a first rib (a first supporting member) projected from the inside of the air duct case toward an air filter 112. Reference numeral 304 denotes a second rib (a second supporting member) projected from the inside of the belt chamber case 100 toward the air filter 112. As shown in Fig. 4, a plurality of the first ribs are formed radially toward a center of an air duct cover formed in substantially a circular shape. The air filter 112 is held between the first rib 300 and the second rib 304 to be supported between the air duct case and a transmission cover. It is preferable that the second ribs are formed in a shape matching the first ribs and in the same number as the first ribs to make this support sure.

When the primary sheave rotates, cooling wind denoted by reference numeral 302 flows into the external air supply path 114 via a duct port 320 and is led to a duct center 310 by the first ribs 300 as shown in Fig. 4.

The first ribs 300 are offset by a predetermined angle θ from a radial direction 312 that is a direction toward the duct center. Consequently, the cooling wind is guided from a space around the duct center 310 toward the center. The cooling wind 302 guided in this way flows toward a central shaft 55t of the primary sheave via the air filter 112 to radially expand from the center according to rotation of the primary sheave. The first ribs 300 are formed to guide the cooling wind to be supplied toward the center of the primary sheave. Thus, a ventilation resistance is reduced and cooling efficiency of the V belt type transmission device is improved. The angle θ for offsetting the first ribs is determined according to circumstances but is preferably in a range of 15° to 45°. In addition, a shape of the first ribs may be a curved shape other than being formed in a linear shape toward the center of the duct case.

As described above, the embodiment provides a cooling structure for a belt type power transmission device with an improved cooling capacity that does not hinder a flow of cooling wind supplied to the belt type power transmission device.

According to a preferred embodiment, a belt type power transmission device is provided, wherein a belt type transmission is housed in a belt chamber, a duct for supplying cooling wind into the belt chamber is connected to the belt chamber such that the cooling wind supplied from the duct into the belt chamber via an inlet circulates in the belt chamber from a center toward a space around the center, an air filter is supported between the belt chamber and a duct case by first and second supporting members, and a shape of at least one of the supporting members is formed so as to have an angle along a direction in which the cooling wind is led to the inlet.

According to an embodiment, the air filter is supported between the belt chamber and the duct case by the first and the second supporting members and a shape of at least one of the supporting members is formed to have an angle along a direction in which the cooling wind is led to the inlet. Thus, since the cooling wind can be supplied to the belt type power transmission device smoothly, it is possible to improve a cooling capacity of the belt type power transmission device.

In a preferred embodiment, the supporting members are formed by plural ribs. The ribs serving as the first supporting member are formed radially with respect to the duct case. The ribs are formed at an angle offset with respect to a radial direction of the duct case. The ribs serving as the second supporting member are formed on the belt chamber side.

Additionally or alternatively, as disclosed above, a belt type power transmission device for motorcycles is provided including the duct case and the cooling structure described above and a traveling vehicle such as a motorcycle including this device.

Accordingly, it is possible to provide a cooling structure for a belt type transmission device with an improved cooling capacity that does not hinder a flow of cooling wind supplied to the belt transmission device.

As explained above, a belt type transmission is housed in a belt chamber, a duct for supplying cooling wind into the belt chamber is connected to the belt chamber such that the cooling wind supplied from the duct into the belt chamber via an inlet circulates in the belt chamber from a center toward a space around the center, an air filter is supported between the belt chamber and a duct case by first and second supporting members, and a shape of at least one of the supporting members is formed so as to have an angle along a direction in which the cooling wind is led to the inlet.

## Claims

1. Power transmission device, comprising a belt type transmission (16) which is housed in a belt chamber (45) having an air inlet (111) for supplying cooling air (302) into the belt chamber (45), wherein the cooling air (302) is supplied from an external air supply path (114), and
an air filter (112) which is supported by supporting members (300, 304) between the belt chamber (45) and an air duct case (108) of the external air supply path (114),
**characterized in that**
the supporting members (300, 304) are formed at an angle (Θ) offset from a radial direction (312) of the air duct case (108), wherein an axial center direction of the air duct case (108) coincides with an axis of a central shaft (55t) of a primary sheave (55) of the transmission (16).

2. Power transmission device according to claim 1, **characterized in that** the air duct case (108) is attached to a belt chamber case (100) which forms the belt chamber (45) therein.

3. Power transmission device according to claim 1 or 2, **characterized in that** first supporting members (300) of said supporting members are provided with, in particular integrally formed with, the air duct case (108).

4. Power transmission device according to at least one of the claims 1 to 3, **characterized in that** second supporting members (304) of said supporting members are provided with, in particular formed integrally, with a belt chamber case (100).

5. Power transmission device according to claim 3 or 4, **characterized in that** at least one of the first and/or second supporting members (300,304) is formed so as to lead the cooling air (302) supplied from the external air supply path (114) into the belt chamber (45) via the air inlet (111) and to circulate in the belt chamber (45) from a center (310) toward a space around the center (310).

6. Power transmission device according to at least one of the claims 3 to 5, **characterized in that** the first and/or second supporting members (300,304) are formed by a plurality of ribs.

7. Power transmission device according to at least one of the claims 1 to 6, **characterized in that** the angle (θ) for offsetting the supporting members (300, 302) and/or the ribs is in a range of 15° to 45°.

8. Power transmission device according to claim 6 or 7, **characterized in that** a shape of the first and/or second ribs is a linear or curved shape, wherein in particular a radially inner end is oriented towards a center (310) of the air duct case (108).

9. Power transmission device according to at least one of the claims 6 to 8, **characterized in that** the ribs serving as the second supporting member (304) are formed on the belt chamber side in a shape matching the first ribs and/or the same number as the first ribs to securely support the air filter (112) therebetween.

10. Travelling vehicle, in particular a straddle-type vehicle, such as a motorcycle which is preferably of a scooter type, comprising a belt type power transmission device, **characterized in that** the power transmission device is configured according to at least one of the claims 1 to 9.

## Patentansprüche

1. Leistungsübertragungsvorrichtung, aufweisend ein Getriebe (16) vom Riemen- Typ, das in einer Riemenkammer (45) untergebracht ist, die einen Lufteinlass (111) zum Zuführen von Kühlluft (302) in die Riemenkammer (45) hat, wobei die Kühlluft (302) von einem externen Luftzuführungspfad (114) zugeführt wird, und einen Luftfilter (112), der durch Lagerungsteile (300, 304) zwischen der Riemenkammer (45) und einem Luftkanalgehäuse (108) des externen Luftzuführungspfades (114) gelagert ist, **dadurch gekennzeichnet, dass**
die Lagerungsteile (300, 304) mit einem Winkel (θ), versetzt von einer radialen Richtung (312) des Luftkanalgehäuses (108), gebildet sind, wobei eine axiale Mittelrichtung des Luftkanalgehäuses (108) mit einer Achse einer Mittelwelle (55t) einer Primärscheibe (55) des Getriebes (16) übereinstimmt.

2. Leistungsübertragungsvorrichtung nach Anspruch 1, **dadurch gekennzeichnet, dass** das Luftkanalgehäuse (108) mit einem Riemenkammergehäuse (100), das darin die Riemenkammer (45) bildet, verbunden ist.

3. Leistungsübertragungsvorrichtung nach Anspruch 1 oder 2, **dadurch gekennzeichnet, dass** erste Lagerungsteile (300) der Lagerungsteile insbesondere einstückig ausgebildet mit dem Luftkanalgehäuse (108) versehen sind.

4. Leistungsübertragungsvorrichtung nach zumindest einem der Ansprüche 1 bis 3, **dadurch gekennzeichnet, dass** zweite Lagerungsteile (304) der Lagerungsteile insbesondere einstückig ausgebildet mit dem Riemenkammergehäuse (100) versehen sind.

5. Leistungsübertragungsvorrichtung nach Anspruch 3 oder 4, **dadurch gekennzeichnet, dass** zumindest eines der ersten und / oder zweiten Lagerungsteile (300, 304) ausgebildet ist, um Kühlluft (302), zugeführt von dem externen Luftzuführungspfad (114) über den Lufteinlass (111), in die Riemenkammer zu führen und in der Riemenkammer (45) von einer Mitte (310) in Richtung zu einem Raum rund um die Mitte (310) in Umlauf zu setzen.

6. Leistungsübertragungsvorrichtung nach zumindest einem der Ansprüche 3 bis 5, **dadurch gekennzeichnet, dass** die ersten und zweiten Lagerungsteile (300, 304) durch eine Mehrzahl von Rippen gebildet sind.

7. Leistungsübertragungsvorrichtung nach zumindest einem der Ansprüche 1 bis 6, **dadurch gekennzeichnet, dass** der Winkel (θ) des Versatzes der Lagerungsteile (300, 302) und / oder der Rippen in dem Bereich von 15° bis 45° ist.

8. Leistungsübertragungsvorrichtung nach Anspruch 6 oder 7, **dadurch gekennzeichnet, dass** eine Form der ersten und / oder zweiten Rippen linear oder in einer gekrümmten Form ist, wobei insbesondere ein radial inneres Ende in Richtung zu einer Mitte (310) des Luftkanalgehäuses (108) orientiert ist.

9. Leistungsübertragungsvorrichtung nach zumindest einem der Ansprüche 6 bis 8, **dadurch gekennzeichnet, dass** die Rippen, die als das zweite Lagerungsteil (304) dienen, auf der Seite der Riemenkammer in einer Form gebildet sind, die mit den ersten Rippen übereinstimmt und / oder derselben Anzahl wie die der ersten Rippen entspricht, um den Luftfilter (112) fest dazwischen zu lagern.

10. Reisefahrzeug, insbesondere ein Fahrzeug vom Grätschsitz- Typ, z. B. ein Motorrad, das vorzugsweise ein Roller- Typ ist, aufweisend eine Leistungsübertragungsvorrichtung vom Riemen- Typ, **dadurch gekennzeichnet, dass** die Leistungsübertragungsvorrichtung gemäß zumindest einem der Ansprüche 1 bis 9 konfiguriert ist.

## Revendications

1. Dispositif de transmission de puissance comprenant une transmission du type à courroie (16) qui est logée dans une chambre de courroie (45) pourvue d'un orifice d'admission d'air (111) pour l'amenée d'air de refroidissement (302) dans ladite chambre de courroie (45), l'air de refroidissement (302) étant amené à partir d'une trajectoire d'amenée d'air externe (114), et pourvue d'un filtre à air (112) qui est supporté par des éléments de support (300, 304) entre la chambre de courroie (45) et un boîtier de conduit d'air (108) de la trajectoire d'amenée d'air externe (114),
**caractérisé en ce que** les éléments de support (300, 304) sont formés suivant un angle (θ) de décalage par rapport à un sens radial (312) du boîtier de conduit d'air (108), la direction d'un centre axial dudit boîtier de conduit d'air (108) coïncidant avec un axe d'un arbre central (55t) d'une poulie primaire (55) de la transmission (16).

2. Dispositif de transmission de puissance selon la revendication 1, **caractérisé en ce que** le boîtier de conduit d'air (108) est fixé à un boîtier de chambre de courroie (100) qui définit la chambre de courroie (45).

3. Dispositif de transmission de puissance selon la revendication 1 ou 2, **caractérisé en ce que** les premiers éléments de support (300) des éléments de support sont prévus avec le boîtier de conduit d'air (108), et sont notamment formés d'une seule pièce avec celui-ci.

4. Dispositif de transmission de puissance selon l'une au moins des revendications 1 à 3, **caractérisé en ce que** les seconds éléments de support (304) des éléments de support sont prévus avec un boîtier de chambre de courroie (100), et sont notamment formés d'une seule pièce avec celui-ci.

5. Dispositif de transmission de puissance selon la revendication 3 ou 4, **caractérisé en ce que** l'un au moins des premier et/ou second éléments de support (300, 304) est formé de manière à guider l'air de refroidissement (302) amené à partir de la trajectoire d'amenée d'air externe (114) jusque dans la chambre de courroie (45) par l'orifice d'admission d'air (111), et à le faire circuler dans ladite chambre de courroie (45) d'un centre (310) vers un espace situé autour du centre (310).

6. Dispositif de transmission de puissance selon l'une au moins des revendications 3 à 5, **caractérisé en ce que** les premiers et/ou seconds éléments de support (300, 304) sont formés par plusieurs nervures.

7. Dispositif de transmission de puissance selon l'une au moins des revendications 1 à 6, **caractérisé en ce que** l'angle (θ) pour décaler les éléments de support (300, 302) et/ou les nervures est situé dans une plage de 15° à 45°.

8. Dispositif de transmission de puissance selon la revendication 6 ou 7, **caractérisé en ce qu'**une forme des premières et/ou secondes nervures est une forme linéaire ou courbe, étant précisé en particulier qu'une extrémité radialement intérieure est orientée vers un centre (310) du boîtier de conduit d'air (108).

9. Dispositif de transmission de puissance selon l'une au moins des revendications 6 à 8, **caractérisé en ce que** les nervures qui servent de second élément de support (304) sont formées sur le côté de la chambre de courroie avec une forme qui correspond à celle des premières nervures et/ou avec un nombre égal à celui des premières nervures pour supporter solidement entre elles le filtre à air (112).

10. Véhicule de transport, en particulier véhicule du type à enfourcher, tel qu'un motocycle de préférence d'un type scooter, comprenant un dispositif de transmission de puissance du type à courroie, **caractérisé en ce que** le dispositif de transmission de puissance est conçu selon l'une au moins des revendications 1 à 9.
